**Europäisches Patentamt**

**European Patent Office**

**Office européen des brevets**

(19)

(11) Veröffentlichungsnummer: **0 360 260**

**A2**

# (12) EUROPÄISCHE PATENTANMELDUNG

(21) Anmeldenummer: **89117430.2**

(22) Anmeldetag: **21.09.89**

(51) Int. Cl.5: **B29C 45/17**

(30) Priorität: **23.09.88 DE 3832429**

(43) Veröffentlichungstag der Anmeldung:
**28.03.90 Patentblatt 90/13**

(84) Benannte Vertragsstaaten:
**AT BE CH DE FR GB IT LI LU NL**

(71) Anmelder: **APPLIED POWER INC.**
**P.O.Box 325**
**Milwaukee Wisconsin 53201(US)**

(72) Erfinder: **Pijpers, Teunis**
**Nijverheidstraat 23**
**NL-3861 RJ Nijkerk(NL)**

(74) Vertreter: **Franke, Karl Wilhelm, Dr.**
**Steinsdorfstrasse 10**
**D-8000 München 22(DE)**

(54) **Wechseltisch.**

(57) Gegenstand der Erfindung ist ein Wechseltisch für den Werkzeugaustausch an einer Spritzgießmaschine, auf dem sich mehrere für einen Einsatz in deren Schließe bestimmte Werkzeuge in Vorrat halten und in Vorbereitung ihrer Einführung in diese Schließe auf eine gewünschte Temperatur vorerwärmen lassen.

Zu höchstmöglicher baulicher Vereinfachung und Raumausnutzung ist dabei von mehreren Aufnahmestellen (3 bis 7) eines Wechseltisches (T) für je ein Werkzeug (W) die mittlere Aufnahmestelle (5), an die sich jedes Werkzeug (W) durch entsprechende Längsverschiebung eines Tisches (2) auf einem Gestell (1) bringen läßt, mit einer Heizeinrichtung (8) ausgestattet, die mit dem an die mittlere Aufnahmestelle (5) verbrachten Werkzeug (W) über in Längsrichtung des Wechseltisches verstellbar und vorzugsweise parallel daneben angeordnete Leitungsanschlüsse (9, 10) für die Speisung mit einem flüssigen Heizmedium verbunden werden kann. Nach Erreichen der gewünschten Temperatur kann dieses Werkzeug (W) dann mittels quer zur Längsrichtung des Wechseltisches (T) wirkender Transporteinrichtungen (14, 15) zunächst aus dem Verstellweg (16, 17) der Leitungsanschlüsse (9, 10) heraus und dann in die Schließe (S) der Spritzgießmaschine (M) hinein verschoben werden. Dabei kann der Betrieb des Wechseltisches (T) in seiner Steuerung mit dem der zu beschickenden Spritzgießmaschine (M) gekoppelt

werden, was einen optimalen Gesamtbetriebsablauf gewährleistet.

## Wechseltisch

Die Erfindung betrifft einen Wechseltisch für den Werkzeugaustausch an einer Spritzgießmaschine, wie er im Oberbegriff des Patentanspruchs 1 im einzelnen angegeben ist.

Ein Wechseltisch soll im Rahmen des Betriebs einer Spritzgießmaschine einen reibungslosen und raschen Austausch eines zunächst verwendeten Werkzeugs durch ein anderes ermöglichen. Dazu bedarf es zum ersten der Bereitstellung einer ausreichenden Anzahl von Plätzen in nächster Nähe der Spritzgießmaschine, auf denen künftig zu verwendende Werkzeuge in Vorrat gehalten und aus der Spritzgießmaschine zu entnehmende Werkzeuge abgestellt werden können. Dabei ist vor allem darauf zu achten, daß die jeweiligen Werkzeuge rasch und bequem in die Schließe der Spritzgießmaschine eingeführt bzw. daraus ausgebracht werden können. Ein wichtiger Aspekt liegt in diesem Zusammenhang auch darin, daß ein neu in die Spritzgießmaschine einzuführendes Werkzeug schon zuvor auf eine ausreichende Temperatur vorerwärmt werden sollte, um die mit dem Werkzeugaustausch zwangsläufig verbundene Unterbrechung im Betrieb der Spritzgießmaschine so kurz wie möglich zu halten.

In Berücksichtigung dieser Grundforderungen sind heute Wechseltische in Gebrauch, die neben und entlang der zu bedienenden Spritzgießmaschine eine bedarfsgerechte Anzahl von Abstellplätzen für die Aufnahme jeweils eines Werkzeugs aufweisen, von denen sich jeweils einer unter entsprechender Längsverschiebung entlang der Spritzgießmaschine vor deren Schließe bringen läßt. Für die den Werkzeugaustausch einleitende Entnahme des in der Spritzgießmaschine befindlichen Werkzeugs wird dabei deren Schließe ein leerer Aufnahmeplatz des Wechseltisches gegenübergestellt, auf den dann das auszutauschende Werkzeug mittels einer quer zur Längsrichtung von Spritz gießmaschine und Wechseltisch wirkenden Transporteinrichtung ausgebracht werden kann. Durch eine weitere Längsverschiebung auf dem Wechseltisch wird sodann das neu in die Spritzgießmaschine einzuführende Werkzeug vor die Schließe gebracht, worauf die Transporteinrichtung mit umgekehrtem Wirkungssinn unter Querverschiebung des neuen Werkzeugs dessen endgültige Einführung in die Schließe der Spritzgießmaschine übernimmt, Außerdem sind zusätzlich Heizeinrichtungen vorgesehen, die über fest angeschlossene Schlauchleitungen die Speisung von auf dem jeweiligen Wechseltisch an festen Plätzen in Vorrat gehaltenen Werkzeugen mit warmem Wasser und damit eine Vorerwärmung dieser Werkzeuge ermöglichen.

Insbesondere in diesem letzten Punkt können die bekannten Wechseltische jedoch nicht voll zufriedenstellen, da der feste Leitungsanschluß mindestens je eine eigene Heizeinrichtung für jeden Vorratsplatz auf dem Wechseltisch notwendig macht, von dem aus ein Werkzeug vorerwärmt in die Spritzgießmaschine eingeführt werden soll. Dies bedeutet jedoch die Notwendigkeit eines unerwünscht großen baulichen Aufwandes oder den Ausfall von auf dem Wechseltisch an sich vorhandenen Abstellplätzen für eine unmittelbare Werkzeugbeschickung der Spritzgießmaschine.

Der Erfindung liegt daher die Aufgabe zugrunde, einen Wechseltisch der eingangs erwähnten Art so auszubilden, daß er bei geringstmöglichem baulichem und finanziellem Aufwand eine volle Nutzung aller seiner Abstellplätze für Werkzeuge und damit eine optimale Bedienung der zugehörigen Spritzgießmaschine ermöglicht.

Die gestellte Aufgabe wird gemäß der Erfindung gelöst durch einen Wechseltisch, wie er im Patentanspruch 1 angegeben ist; vorteilhafte Ausgestaltungen und Weiterbildungen der Erfindung ergeben sich aus den Unteransprüchen.

Der erfindungsgemäß ausgebildete Wechseltisch kommt im Prinzip mit nur einer Heizeinrichtung aus, die eine Vorerwärmung jedes einzelnen, zunächst an einem beliebigen Aufnahmeplatz in Vorrat gehaltenen Werkzeugs vor dessen Einführung in die Schließe der Spritzgießmaschine bewirken kann, nachdem dieses Werkzeug in Gegenüberstellung zur Schließe gebracht worden ist. Dabei wird für diese Vorerwärmung außerdem nur ein solcher Platz auf dem Wechseltisch blockiert, der für eine Beschickung des Wechseltisches mit neuen Werkzeugen von außen her ohnehin ausscheidet, da die Sicherheitsvorschriften eine Werkzeugbeschickung des Wechseltisches von außen beispielsweise mittels Gabelstaplern an der in Verlängerung der Schließe der Spritzgießmaschine liegenden Stelle des Wechseltisches nicht erlauben.

Zusätzlich ermöglicht die Erfindung auch eine einfache Anpassung an Werkzeuge mit unterschiedlichem x-Maß bei deren Vorerwärmung, indem der Hub der verstellbaren Leitungsanschlüsse entsprechend bemessen wird. Die für die Verbindung der Leitungsanschlüsse mit den an den Adaptorplatten der Werkzeuge mündenden Speisekanäle erforderliche Zugänglichkeit dieser Adaptorplatten läßt sich auch ohne Vergrößerung des Zwischenmaßes zwischen den Werkzeugen auf dem Wechseltisch erhalten, indem eine Querverschiebung für das der Schließe der Spritzgießmaschine gegenüberstehende Werkzeug von der Spritzgießmaschine weg vorgesehen wird, wobei als Antrieb für diese Querverschiebung gegebenenfalls auch die Transporteinrichtung herangezogen werden kann, die zur Einführung und zur Entnahme des betreffenden Werkzeugs in die bzw. aus der Schließe der Spritzgießmaschine vorgesehen ist. Als günstig und vorteilhaft erweist es sich weiter auch, daß der gesamte Wechseltischbetrieb hinsichtlich seiner Steuerung einfach mit dem Betriebsablauf in der Spritzgießmaschine gekoppelt werden kann, wobei beispielsweise die Vorerwärmung eines neu in die Spritzgießmaschine einzuführenden Werkzeugs auf dem Wechseltisch über die Spritzgießmaschinensteuerung ausgelöst werden kann. Möglich ist aber auch eine unabhängige Steuerung für den Wechseltisch allein.

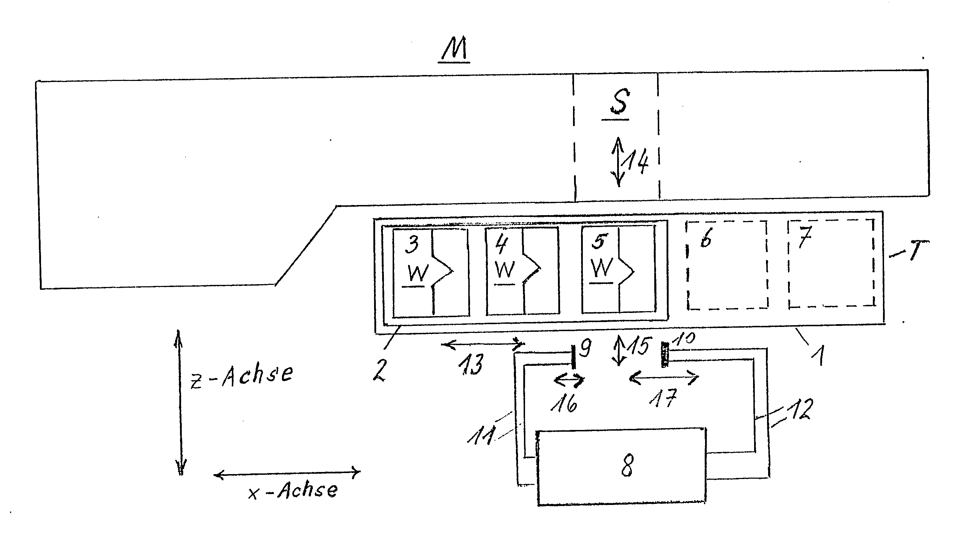

Für die weitere Erläuterung der Erfindung und ihrer Vorteile wird nunmehr auf die Zeichnung Bezug genommen, in der ein bevorzugtes Ausführungsbeispiel für die Erfindung veranschaulicht ist; dabei zeigt die einzige Figur der Zeichnung einen gemäß der Erfindung ausgebildeten Wechseltisch in Verbindung mit einer davon zu beschickenden Spritzgießmaschine in einer im wesentlichen als Draufsicht ausgeführten Prinzipdarstellung unter Weglassung von das Wesen der Erfindung nicht weiter berührenden baulichen Einzelheiten.

In der Zeichnung ist ein Wechseltisch T dargestellt, der zur Beschickung einer Spritzgießmaschine M an deren Schließe S mit Werkzeugen W dient und seitlich neben der Spritzgießmaschine M und parallel zu deren Längsrichtung angeordnet ist. Der in der Zeichnung dargestellte Wechseltisch T weist auf einem tragenden Gestell 1 in seiner Längsrichtung aufeinanderfolgend insgesamt fünf Aufnahmestellen 3 bis 7 auf, die jede so bemessen sind, daß darauf je ein Werkzeug W untergebracht werden kann. Von diesen Aufnahmestellen 3 bis 7 liegt die mittlere Aufnahmestelle 5 der Schließe S der Spritzgießmaschine M gegenüber; ein an diese Aufnahmestelle 5 verbrachtes Werkzeug W befindet sich daher unmittelbar vor der Schließe S der Spritzgießmaschine M und kann unter Verschiebung quer zur Längsrichtung von Spritzgießmaschine M und Wechseltisch T in die Schließe S eingeführt werden. Umgekehrt läßt sich ein in der Schließe S befindliches Werkzeug W unter umgekehrter Querverschiebung aus der Schließe S auf diese Aufnahmestelle 5 ausbringen, die dazu natürlich frei sein muß. Eine Transporteinrichtung, die eine solche Querverschiebung von Werkzeugen W in die Schließe S hinein bzw. aus dieser heraus bewirken kann, ist in der Zeichnung lediglich schematisch durch einen Doppelpfeil 14 angedeutet; in der Praxis kommen dafür beispielsweise Kettentriebe oder Hydraulikantriebe in Betracht.

Auf dem Gestell 1 des Wechseltisches T ist in dessen Längsrichtung verschiebbar ein Wagen 2 gelagert, der etwa die gleiche Breite aufweist wie das Gestell 1 und so lang ist, daß er drei der fünf Aufnahmestellen 3 bis 7 überdeckt. In dem in der Zeichnung dargestellten Falle sind dies die Aufnahmestellen 3 bis 5, wobei diese, da der Wagen 2 drei Werkzeuge W trägt, sämtlich mit Werkzeugen W belegt sind, während die in der Zeichnung rechts von dem Wagen 2 liegenden Aufnahmestellen 6 und 7 von Werkzeugen W frei sind. Diese beiden Aufnahmestellen 6 und 7 lassen sich durch eine Verschiebung des Wagens 2 nach rechts mit Werkzeugen W belegen, und dadurch wird es möglich, jedes der drei auf dem Wagen 2 befindlichen Werkzeuge W an die mittlere Aufnahmestelle 5 zu verbringen, von wo aus dann eine Beschickung der Schließe S der Spritzgießmaschine M mit dem betreffenden Werkzeug W möglich ist, wozu die durch den Doppelpfeil 14 angedeutete Transporteinrichtung in Tätigkeit gesetzt wird. Auch der Wagen 2 stellt im Prinzip eine Transporteinrichtung dar, die dem Werkzeugtransport in der Längsrichtung des Wechseltisches T dient, wobei der entsprechende Antrieb in der Zeichnung wiederum nur schematisch durch einen Doppelpfeil 13 angedeutet ist. Auch dieser Antrieb kann in Form eines Kettentriebes oder - bevorzugt - als Hydraulikantrieb ausgebildet sein, wie dies auch für den durch den Doppelpfeil 14 angedeuteten Querverschiebungsantrieb für den Werkzeugtransport in die Schließe S hinein bzw. aus dieser heraus gilt.

Wie die Zeichnung weiter zeigt, ist der Wechseltisch T zusätzlich mit einer Heizeinrichtung 8 ausgestattet, die es ermöglicht, ein Werkzeug W vor seiner Einführung in die Schließe S der Spritzgießmaschine M auf eine passende Temperatur vorzuwärmen. Diese Vorwärmung erfolgt durch Speisung des betreffenden Werkzeugs W mit einem flüssigen Heizmedium, das in der Heizeinrichtung 8 erwärmt und durch Kanäle in dem zu erwärmenden Werkzeug W hindurchgeleitet wird, die beim Einsatz des Werkzeugs W in der Spritzgießmaschine M je nach Bedarf als Kühl- oder Heizmittelleiter dienen. Als Verbindung zwischen der Heizeinrichtung 8 und dam vorzuwärmenden Werkzeug W, das sich dabei im Bereich der Aufnahmestelle 5 befindet, der die Heizeinrichtung 8 zugeordnet ist, dienen Leitungen 11 und 12, die in verstellbaren Leitungsanschlüssen 9 bzw. 10 enden und jeweils einer Hälfte des vorzuwärmenden Werkzeugs W zugeordnet sind. Die Leitungsanschlüsse 9 und 10 lassen sich zum Verbinden mit dem aus der Heizeinrichtung 8 mit Heizmedium· zu speisenden Werkzeug W mit Hilfe von in der Zeichnung wiederum nur schematisch durch je einen Doppelpfeil 16 bzw. 17 angedeuteten hydraulischen Stellantrieben parallel zur Längsachse des Wechseltisches T verstellen, bis sie an den äußeren Adaptorplatten der jeweiligen Werkzeughälften in die zugeordneten Kanäle münden. Dabei kann der Längsverstellhub wenigstens für einen dieser Leitungsanschlüsse 9 und 10 so groß bemessen werden, daß eine Anpassung an Werkzeuge mit unterschiedlichen x-Maßen möglich ist, wie dies in der Zeichnung durch die größere Länge des zu dem Leitungsanschluß 10 gehörenden Doppelpfeil 17 angedeutet ist.

Während in der Zeichnung die Heizeinrichtung 8 der Übersichtlichkeit halber neben dem Gestell 1 des Wechseltisches T dargestellt ist, kann sie in der Praxis auch im Inneren des Gestells 1 unterhalb oder neben der mittleren Aufnahmestelle 5, zu der sie gehört, liegen. Die längsverstellbaren Leitungsanschlüsse 9 und 10 dagegen werden zweckmäßig an der in der Zeichnung gezeigten Stelle seitlich neben dem Gestell 1 des Wechseltisches T angeordnet, um eine möglichst dichte Nebeneinanderanordnung der Werkzeuge W auf dem Wagen 2 zu ermöglichen. Um dennoch den erforderlichen Zugang zu den Adaptorplatten des mit der Heizeinrichtung 8 an der Aufnahmestelle 5 zu verbindenden Werkzeugs W für die Leitungsanschlüsse 9 und 10 sicherzustellen, ist im Bereich der Aufnahmestelle 5 mit der Heizeinrichtung 8 und den Leitungsanschlüssen 9 und 10 sowie in Verlängerung der Wirkungslinie der Quertransporteinrichtung für den Werkzeugtransport in die Schließe S hinein bzw. daraus heraus im Sinne des Doppelpfeiles 14 eine weitere, in der Zeichnung wiederum nur schematisch in Form eines Doppelpfeiles 15 angedeutete Quertransportmöglichkeit vorgesehen, die ein Herausführen des an der Aufnahmestelle 5 befindlichen Werkzeugs W quer zur Längsachse des Wechseltisches T bis in den Verstellweg der Leitungsanschlüsse 9 und 10 parallel zu dieser Achse hinein erlaubt, so daß diese Leitungsanschlüsse 9 und 10 dann an die Seitenflächen dieses Werkzeugs W angelegt werden können. Für diese zusätzliche Querverschiebung des die Aufnahmestelle 5 besetzenden Werkzeugs W im Sinne des Doppelpfeiles 15 kann als Antrieb wiederum ein Kettentrieb oder ein Hydraulikantrieb sorgen, wobei dieser Antrieb als eine eigene Transporteinrichtung ausgebildet sein oder durch eine entsprechende Gestaltung der Transporteinrichtung für die Querverschiebung gemäß dem Doppelpfeil 14 erhalten werden kann.

Im praktischen Betrieb des Wechseltisches T werden die Steuerbefehle für die Betätigung der verschiedenen Transporteinrichtungen für den Werkzeugtransport im Sinne der Doppelpfeile 13 bis 15 und für die Längsverstellung der Leitungsanschlüsse 9 und 10 sowie für die Aktivierung der Heizeinrichtung 8 zweckmäßig von der Steuerung der Spritzgießmaschine M geliefert, um einen koordinierten Betrieb des Wechseltisches T und der Spritzgießmaschine M sicherzustellen. Die dafür erforderlichen Steuerleitungen sind in der Zeichnung der Übersichtlichkeit halber allerdings nicht eigens dargestellt. Alternativ kann gewünschtenfalls aber auch eine unabhängige Steuerung nur für den Wechseltisch T allein vorgesehen werden.

In dem in der Zeichnung dargestellten Fall eines mit drei Werkzeugen W vollständig besetzten Wagens 2 gestaltet sich die Beschickung der dann als leer anzunehmenden Schließe S der Spritzgießmaschine M mit einem neuen Werkzeug W so, daß dieses Werkzeug W - gegebenenfalls durch entsprechende Verschiebung des Wagens 2 auf dem Gestell 1 nach rechts - an die der Schließe S gegenüberliegende mittlere Aufnahmestelle 5 gebracht wird. Anschließend wird dieses Werkzeug W entlang des Doppelpfeiles 15 in den Verstellweg der Leitungsanschlüsse 9 und 10 hinein querverschoben. Als nächstes werden die Leitunganschlüsse 9 und 10 unter entsprechender Längsverstellung parallel zur x-Achse mit den Speisekanälen in den beiden Werkzeughälften verbunden, worauf die Speisung dieser Kanäle mit warmem Heizmedium, beispielsweise mit warmem Wasser, aus der Heizeinrichtung 8 erfolgt. Sobald dann das Werkzeug W auf diese Weise die gewünschte Temperatur erreicht hat, werden die Leitungsanschlüsse 9 und 10 entlang der jeweiligen Doppelpfeile 16 bzw. 17 wieder abgelöst, und das Werkzeug W wird zunächst entsprechend dem Doppelpfeil 15 bis zu der Aufnahmestelle 5 und dann entlang dem Doppelpfeil 14 weiter bis in die Schließe S der Spritzgießmaschine M hinein in Richtung der z-Achse querverschoben, womit der Betrieb der Spritzgießmaschine M mit diesem Werkzeug W beginnt.

Für die Entnahme eines auszutauschenden Werkzeugs W aus der Schließe S ist zunächst ein unbesetzter Aufnahmeplatz des Wagens 2 an die Aufnahmestelle 5 zu verbringen, auf den dann dieses Werkzeug W unter Querverschiebung entlang des Doppelpfeiles 14 ausgebracht werden kann. Durch entsprechende Längsverschiebung des Wagens 2 kann dann anschließend ein bereits vorerwärmtes neues Werkzeug W an die Aufnahmestelle 5 gefahren werden, von der aus es in die Schließe S hinein querverschoben werden kann.

Auf der Grundlage einer koordinierten Steuerung des Betriebsablaufes ermöglicht somit der dargestellte Wechseltisch T einen Werkzeugaustausch für die Spritzgießmaschine M unter minimaler Unterbrechung von deren Betrieb.

Die vorstehende Beschreibung zeigt, daß die Erfindung insgesamt zu einem Wechseltisch für den Werkzeugaustausch an einer Spritzgießmaschine führt, auf dem sich mehrere für den Einsatz in deren Schließe bestimmte Werkzeuge in Vorrat halten und in Vorbereitung ihrer jeweiligen Einführung in diese Schließe auf eine gewünschte Temperatur vorerwärmen lassen. Eine höchstmögliche bauliche Vereinfachung und Raumausnutzung ergeben sich dabei dadurch, daß von mehreren Aufnahmestellen des Wechseltisches für je ein Werkzeug die mittlere Aufnahmestelle, an die jedes Werkzeug durch entsprechende Längsverschiebung eines Wagens auf einem Gestell des Wechseltisches gebracht werden kann, mit einer Heizeinrichtung ausgestattet ist, mit der sich das an diese mittlere Aufnahmestelle verbrachte Werkzeug über in Längsrichtung des Wechseltisches und vorzugsweise parallel daneben verstellbar angeordnete Leitungsanschlüsse für die Speisung mit einem flüssigen Heizmedium aus der Heizeinrichtung verbinden läßt. Im Bereich der mittleren Aufnahmestelle des Wechseltisches angeordnete und quer zur Längsachse des Wechseltisches wirkende Transporteinrichtungen ermöglichen zunächst eine Querverschiebung des an der mittleren Aufnahmestelle befindlichen Werkzeugs in den Verstellweg der Leitungsanschlüsse für die Speisung mit dem Heizmedium und nach Erreichen der gewünschten Temperatur eine Querverschiebung des Werkzeugs in umgekehrter Richtung bis in die Schließe der Spritzgießmaschine hinein. Durch eine passende Kopplung in der Steuerung des Betriebs der Spritzgießmaschine einerseits und des Wechseltisches andererseits kann ein optimaler Gesamtbetriebsablauf sichergestellt werden.

Ergänzend kann noch angemerkt werden, daß die Anzahl der Aufnahmestellen für Werkzeuge auf dem Wechseltisch den Betriebserfordernissen der zu beschickenden Spritzgießmaschine angepaßt werden kann, ohne den Bereich der Erfindung zu verlassen. Beispielsweise können statt der bei dem oben behandelten Ausführungsbeispiel vorhandenen fünf Aufnahmestellen nur drei oder auch sieben vorgesehen werden, wobei jeweils die mittlere Aufnahmestelle mit der Heizeinrichtung und den Transporteinrichtungen für den Quertransport der Werkzeuge auf die Schließe der Spritzgießmaschine zu und davon weg auszustatten ist. Gegebenenfalls können statt nur einer Heizeinrichtung auch deren zwei - für jede Hälfte des vorzuwärmenden Werkzeugs eine eigene - vorgesehen werden, wenn dies zur Vereinfachung der Leitungsführung im Gestell oder aus sonstigen Raumgründen zweckmäßig erscheinen sollte.

**Ansprüche**

1. Wechseltisch für den Werkzeugaustausch an einer Spritzgießmaschine mit einem sich entlang der Längsrichtung der Spritzgießmaschine (x-Achse) erstreckenden Gestell von wenigstens dem Dreifachen des x-Maßes eines Werkzeugs entsprechender Länge und einer entsprechenden Anzahl von Werkzeugaufnahmestellen, mit einem auf diesem Gestell verfahrbaren Wagen mit eine Nebeneinanderordnung von wenigstens zwei Werkzeugen gestattender Länge und einer entsprechenden Anzahl von Werkzeugaufnahmeplätzen, mit einer ersten Transporteinrichtung zum Verfahren des Wagens auf dem Gestell in der Richtung der x-Achse für das Verbringen jeweils eines auf dem Wagen befindlichen Werkzeugs an die der Schließe der Spritzgießmaschine gegenüberliegende Werkzeugaufnahmestelle auf dem Gestell, mit einer zweiten Transporteinrichtung zum Ein- und Ausführen eines Werkzeugs in die Schließ der Spritzgießmaschine hinein bzw. daraus heraus quer zur Längsrichtung der Spritzgießmaschine (z-Achse) und mit wenigstens einer Heizeinrichtung zum Vorwärmen eines Werkzeugs mittels Durchleitens eines flüssigen Heizmediums vor der Einführung dieses Werkzeugs in die Schließe der Spritzgießmaschine, dadurch gekennzeichnet, daß die der Schließe (S) der Spritzgießmaschine (M) gegenüberliegende mittlere Werkzeugaufnahmestelle (5) des Gestells (1) mit entlang dessen Längsrichtung verstellbaren und mit der bzw. den Heizeinrichtung(en) (8) verbundenen Leitungsanschlüssen (9, 10) für die Zu- und Abführung von flüssigem Heizmedium zu den bzw. von den beiden Hälften des der Schließe (S) der Spritzgießmaschine (M) gegenüberstehenden Werkzeugs (W) versehen ist.

2. Wechseltisch nach Anspruch 1, dadurch gekennzeichnet, daß der Längsverstellhub (16, 17) der Leitungsanschlüsse (9, 10) für wenigstens eine Werkzeughälfte auf eine Anpassung an Werkzeuge mit unterschiedlichen Maßen in der Längsrichtung des Wechseltisches (T) und der Spritzgießmaschine (M) (x-Maß der Werkzeuge) eingerichtet ist.

3. Wechseltisch nach Anspruch 1 oder 2, dadurch gekennzeichnet, daß die Leitungsanschlüsse (9, 10) außerhalb des Transportweges für die Werkzeuge (W) entlang der Längsrichtung des Wechseltisches (T) auf dessen der Spritzgießmaschine (M) abgewandter Seite angeordnet sind und daß zusätzlich an der mittleren Werkzeugaufnahmestelle (5) des Gestells (1) eine dritte Transporteinrichtung (15) für einen Transport des der Schließe (S) der Spritzgießmaschine (M) gegenüberstehenden Werkzeugs (W) quer zur Längsrichtung der Spritzgießmaschine (M) und in den Verstellweg der Leitungsanschlüsse (9, 10) hinein bzw. daraus heraus vorgesehen ist.

4. Wechseltisch nach einem oder mehreren der Ansprüche 1 bis 3, dadurch gekennzeichnet,

daß die Steuerung der Bewegungsabläufe für die Werkzeuge (W) und die Leitungsanschlüsse (9, 10) am Wechseltisch (T) und der Betrieb der Heizeinrichtung(en) (8) mit dem Betriebsablauf in der Spritzgießmaschine (M) gekoppelt sind.

5. Wechseltisch nach einem oder mehreren der Ansprüche 1 bis 3, dadurch gekennzeichnet, daß zum Steuern der Bewegungsabläufe für die Werkzeuge (W) und die Leitungsanschlüsse (9, 10) am Wechseltisch (T) und des Betriebs der Heizeinrichtung(en) (8) eine eigene und unabhängige Steuerung vorgesehen ist.

M

S

3 W

4 W

5 W

6

7

T

2

13

9

15

10

16

17

11

12

8

1

14

z-Achse

x-Achse

EP 0 360 260 A2